# EUROPÄISCHE PATENTANMELDUNG

(11) **EP 3 255 645 A1**
(43) Veröffentlichungstag der Anmeldung: **13.12.2017**
(21) Anmeldenummer: 17171680.6
(22) Anmeldetag: 18.05.2017
(51) Int. Cl.: H01F 41/02, H02K 15/00, H01F 7/02

(54) **VERFAHREN ZUM WIEDERVERWERTEN WENIGSTENS EINES MAGNETS EINER ELEKTRISCHEN MASCHINE**

(30) Priorität: 08.06.2016 DE 102016007038
(71) Anmelder: AUDI AG, 85045 Ingolstadt (DE)
(72) Erfinder: MENKE, Tobias, 85049 Ingolstadt (DE); ZIESELER, Lisa, 85051 Ingolstadt (DE); NAGEL, Alwin, 73728 Esslingen (DE); SCHWEIZER, Stephanie, 73560 Böbingen (DE)

(57) **Zusammenfassung**

Die Erfindung betrifft ein Verfahren zum Wiederverwerten wenigstens eines Magnets (3) einer elektrischen Maschine (1), wobei eine den Magnet (3) aufweisende Baugruppe (2) aus der elektrischen Maschine (1) ausgebaut wird. Dabei sind die folgenden Schritte vorgesehen: Durchführen einer ersten thermischen Behandlung der Baugruppe (2) bei einer ersten Temperatur, mechanisches Heraustrennen des Magnets (3) aus der Baugruppe (2), sowie Durchführen einer zweiten thermischen Behandlung des Magnets (3) bei einer zweiten Temperatur, die höher ist als die erste Temperatur, zum Entbindern und/oder Reinigen des Magnets (3).

## Beschreibung

Die Erfindung betrifft ein Verfahren zum Wiederverwerten wenigstens eines Magnets einer elektrischen Maschine, wobei eine den Magnet aufweisende Baugruppe aus der elektrischen Maschine ausgebaut wird.

Der Magnet bildet einen Teil der elektrischen Maschine, welche beispielsweise einem Kraftfahrzeug zugeordnet ist. Insbesondere stellt die elektrische Maschine eine Traktionsmaschine des Kraftfahrzeugs dar. Der Magnet liegt in Form eines Dauermagnets vor oder weist einen solchen zumindest auf. Der Dauermagnet besteht aus einem magnetischen Werkstoff, insbesondere aus einem hartmagnetischen Werkstoff. Derartige Werkstoffe sind eine essenzielle Komponente von elektrischen Maschinen. Ihre magnetischen Eigenschaften definierten maßgeblich deren Leistungsfähigkeit.

Der Dauermagnet liegt beispielsweise in Form eines gesinterten Neodym-Eisen-Bor Magnets vor. Diese haben im Vergleich zu anderen Magneten ein sehr hohes Energieprodukt. Daher werden in Anwendungen mit einer hohen Anforderung an die Leistungsdichte, beispielsweise falls die elektrische Maschine als Traktionsmaschine vorliegt, vermehrt derartige Dauermagnete verwendet. Um eine hinreichende Temperaturstabilität der magnetischen Eigenschaften von solchen Magneten zu erreichen, kann die ternäre Verbindung (Nd₂Fe₁₄B) mit Zugabe von schweren Seltenen Erden, zum Beispiel Dysprosium oder Terbium, und/oder weiteren chemischen Elementen, zum Beispiel Aluminium, Kobalt, Kupfer oder dergleichen, und weiteren werkstofftechnologischen Maßnahmen aufgewertet werden.

Weil bei der Gewinnung der für die Dauermagnete benötigten Seltenen Erden eine starke Umweltbelastung auftritt, hat das Recycling der Dauermagnete in der Zwischenzeit einen hohen Stellenwert gewonnen. Derzeit wird jedoch keine Rückgewinnung von Dauermagneten aus Kraftfahrzeugen vorgenommen, sodass diese gemeinsam mit weiteren Bauteilen des Kraftfahrzeugs einem Shredderprozess zugeführt werden. Dabei werden die metallischen Komponenten zur Rückgewinnung von Stahl und Aluminium eingeschmolzen, weshalb der wertvolle Rohstoff aus den Dauermagneten verlorengeht.

Es ist Aufgabe der Erfindung, ein Verfahren zu Wiederverwerten wenigstens eines Magnets einer elektrischen Maschine vorzuschlagen, welches gegenüber bekannten Verfahren Vorteile aufweist, insbesondere die Gewinnung von Magnetwerkstoff hoher Qualität und/oder die Bereitstellung eines recycelten Magnets mit sehr guten magnetischen Eigenschaften ermöglicht, wobei das Verfahren bevorzugt auch für einen geschrägten Rotor der elektrischen Maschine einsetzbar ist.

Dies wird erfindungsgemäß mittels eines Verfahrens erreicht, welches sich durch die folgenden Schritte auszeichnet: Durchführen einer ersten thermischen Behandlung der Baugruppe bei einer ersten Temperatur, mechanisches Heraustrennen des Magnets aus der Baugruppe, sowie Durchführen einer zweiten thermischen Behandlung des Magnets bei einer zweiten Temperatur, die höher ist als die erste Temperatur, zum Entbindern und/oder Reinigen des Magnets.

Die elektrische Maschine weist den Magnet auf, wobei der Magnet Bestandteil der Baugruppe der elektrischen Maschine sein kann. Zunächst wird diese Baugruppe aus der elektrischen Maschine ausgebaut und nachfolgend der ersten thermischen Behandlung zugeführt. Im Rahmen der ersten thermischen Behandlung wird die Baugruppe auf eine erste Temperatur gebracht, beispielsweise auf eine Temperatur von 330 °C bis 430 °C, von 340 °C bis 420 °C, von 360 °C bis 400 °C, von 370 °C bis 390 °C oder ungefähr 380 °C, insbesondere genau 380 °C. Die erste thermische Behandlung dient insbesondere einer Entmagnetisierung des Magnets und/oder einer teilweisen Zersetzung eines einer Befestigung des Magnets dienenden Magnetklebstoffs und/oder der Trennung von segmentierten Einzelmagneten des Magnets und/oder einem Lösen eines Blechverbunds des Magnets.

Mithilfe des Magnetklebstoffs ist der Magnet beispielsweise in einem Blechteil oder einem Blechpaket der Baugruppe fixiert. Auch die Einzelmagnete können mithilfe eines Magnetklebstoffs aneinander befestigt sein. Hierbei kann der gleiche Magnetklebstoff verwendet werden wie zur Fixierung des Magnets in oder an dem Blechteil beziehungsweise Blechpaket. Beispielsweise dient die erste thermische Behandlung dem Zersetzen, insbesondere dem vollständigen Zersetzen, des der Befestigung des Magnets an dem Blechteil dienenden Magnetklebstoffs. Es kann jedoch vorgesehen sein, dass der Magnetklebstoff, der die Einzelmagnete miteinander verbindet, während der ersten thermischen Behandlung nur teilweise oder überhaupt nicht zersetzt wird.

Vor dem Durchführen der ersten thermischen Behandlung kann es vorgesehen sein, einzelne Elemente aus der Baugruppe zu entfernen. Beispielsweise liegt die Baugruppe in Form eines Rotorteils eines Rotors der elektrischen Maschine vor. Der Rotor weist das den Magnet enthaltende Rotorteil auf, welches beispielsweise auf einer Welle der elektrischen Maschine drehfest angeordnet ist. Beispielsweise ist das Rotorteil auf die Welle aufgepresst. In diesem Fall kann die Welle aus dem Rotorteil ausgepresst und entfernt werden. Die Baugruppe besteht insoweit beispielsweise aus wenigstens einem Blechteil, insbesondere einem Blechpaket, und dem Magnet, wobei der Magnet mittels des Magnetklebstoffs an dem Blechteil beziehungsweise dem Blechpaket befestigt ist.

Nach der ersten thermischen Behandlung wird der Magnet aus der Baugruppe mechanisch herausgetrennt. Dies kann beispielsweise mittels eines mechanischen Trennverfahrens erfolgen, beispielsweise durch Rütteln beziehungsweise Vibration. Nach dem Heraustrennen liegt der Magnet separat von der Baugruppe vor.

Nach dem mechanischen Heraustrennen wird der Magnet, insbesondere der Magnet alleine, also ohne weitere Elemente der Baugruppe, der zweiten thermischen Behandlung zugeführt. Die zweite thermische Behandlung erfolgt bei einer zweiten Temperatur, welche höher ist als die erste Temperatur. Beispielsweise ist die zweite Temperatur um wenigstens 10 %, wenigstens 15 %, wenigstens 20 %, wenigstens 25 %, wenigstens 30 %, wenigstens 35 %, wenigstens 40 %, wenigstens 45 % oder wenigstens 50 % größer als die erste Temperatur. Beispielsweise beträgt die zweite Temperatur 450 °C bis 550 °C, 460 °C bis 540 °C, 470 °C bis 530 °C, 480 °C bis 520 °C, 490 °C bis 510 °C oder ungefähr oder genau 500 °C. Die zweite thermische Behandlung dient dem Entbindern und/oder Reinigen des Magnets.

Das Verfahren hat den Vorteil, dass es auch das Wiederverwerten des Magnets bei einem geschrägten Rotor der elektrischen Maschine ohne Weiteres ermöglicht. Bei einem solchen geschrägten Rotor sind in Richtung der Längsmittelachse des Rotors aufeinanderfolgende Magnete in Umfangsrichtung versetzt zueinander angeordnet.

Eine weitere Ausgestaltung der Erfindung sieht vor, dass die erste Temperatur und/oder eine erste Zeitspanne, über die die erste thermische Behandlung durchgeführt wird, derart gewählt werden/wird, dass während der ersten thermischen Behandlung ein an dem Magnet vorliegender Magnetklebstoff zumindest teilweise, insbesondere nur teilweise, zersetzt wird. Auf den Zweck der ersten thermischen Behandlung wurde vorstehend bereits eingegangen, ebenso auf die erste Temperatur, auf welche die Baugruppe während der ersten thermischen Behandlung erwärmt wird.

Unter der ersten Zeitspanne ist die Zeitspanne zu verstehen, über welche hinweg die Baugruppe auf der ersten Temperatur gehalten wird. Beispielsweise weist die erste Zeitspanne eine Dauer von wenigstens 30 Minuten, wenigstens 35 Minuten, wenigstens 40 Minuten, wenigstens 45 Minuten, wenigstens 50 Minuten, wenigstens 55 Minuten oder wenigstens 60 Minuten auf. Die erste Temperatur und/oder die erste Zeitspanne werden derart gewählt, dass der Magnetklebstoff, der an dem Magnet vorliegt, teilweise oder vollständig zersetzt wird. Besonders bevorzugt ist ein lediglich teilweises Zersetzen vorgesehen, sodass nach der ersten thermischen Behandlung zumindest ein Teil des Magnetklebstoffs in chemisch unveränderter Form vorliegt.

Eine bevorzugte weitere Ausgestaltung der Erfindung sieht vor, dass mittels des nach der ersten thermischen Behandlung durchgeführten Heraustrennens ein Blechteil aus dem Magnet mechanisch getrennt wird, insbesondere durch Rütteln. Hierauf wurde vorstehend bereits hingewiesen. Das Heraustrennen erfolgt nach der ersten thermischen Behandlung, insbesondere unmittelbar nach der ersten thermischen Behandlung. Es kann vorgesehen sein, dass der Magnet vor dem Heraustrennen zunächst abgekühlt wird, nämlich auf eine Temperatur, die kleiner ist als die erste Temperatur. Es kann jedoch auch vorgesehen sein, das Heraustrennen vorzunehmen, während der Magnet bei der ersten Temperatur vorliegt. Durch das Heraustrennen wird das Blechteil aus der Baugruppe herausgetrennt, also von dem Magnet abgetrennt. Das Heraustrennen ist insbesondere möglich, weil der Magnetklebstoff, mittels welchem der Magnet an dem Blechteil befestigt ist, bereits zumindest teilweise zersetzt ist.

Im Rahmen einer weiteren Ausgestaltung der Erfindung ist vorgesehen, dass der Magnet nach der ersten thermischen Behandlung und vor der zweiten thermischen Behandlung auf eine Temperatur abgekühlt wird, die kleiner ist als die erste Temperatur. Das Abkühlen kann beispielsweise vor dem Heraustrennen des Magnets aus der Baugruppe erfolgen. Alternativ ist das Abkühlen nach dem Heraustrennen vorgesehen. In beiden Fällen liegt der Magnet vor der zweiten thermischen Behandlung auf einer Temperatur vor, welche niedriger ist als die erste Temperatur. Es kann jedoch auch vorgesehen sein, dass das Heraustrennen des Magnets aus der Baugruppe bei einer Temperatur erfolgt, die größer ist als die zweite Temperatur, beispielsweise zwischen der ersten Temperatur und der zweiten Temperatur liegt, oder der zweiten Temperatur entspricht. Beispielsweise wird das Heraustrennen vorgenommen, während die Baugruppe in Richtung der zweiten Temperatur abkühlt, diese jedoch noch nicht erreicht hat. Alternativ wird die Baugruppe während des Heraustrennens auf der ersten Temperatur gehalten.

Eine weitere bevorzugte Ausführungsform der Erfindung sieht vor, dass die zweite Temperatur und/oder eine zweite Zeitspanne, über die die zweite thermische Behandlung durchgeführt wird, derart gewählt werden/wird, dass während der zweiten thermischen Behandlung der an dem Magnet vorliegende Magnetklebstoff vollständig zersetzt wird. Wenn der Magnetklebstoff während der ersten thermischen Behandlung lediglich teilweise zersetzt wurde, erfolgt das vollständige Zersetzen während der zweiten thermischen Behandlung. Hierzu werden die zweite Temperatur und/oder die zweite Zeitspanne entsprechend gewählt. Beispielsweise wird während der zweiten thermischen Behandlung der Magnetklebstoff zersetzt, insbesondere vollständig zersetzt, der die Einzelmagnete des Magnets miteinander verbindet beziehungsweise aneinander befestigt.

Die zweite Temperatur liegt beispielsweise in dem Bereich von 450 °C bis 550 °C, von 460 °C bis 540 °C, von 470 °C bis 530 °C, von 480 °C bis 520 °C, von 490 °C bis 510 °C oder ungefähr oder genau 500 °C. Die zweite Zeitspanne weist beispielsweise eine Dauer auf, welche größer ist als die Dauer der ersten Zeitspanne. Die zweite Zeitspanne ist insoweit länger als die erste Zeitspanne, insbesondere um einen Faktor von mindestens 1,5, mindestens 1,75, mindestens 2, mindestens 2,25 oder mindestens 2,5. Beispielsweise beträgt die Dauer der zweiten Zeitspanne etwa zwei Stunden.

Im Rahmen einer weiteren Ausgestaltung der Erfindung ist vorgesehen, dass die erste Temperatur und/oder die erste Zeitspanne derart gewählt werden/wird, dass eine Korrosionsbeschichtung des Magnets vollständig erhalten bleibt, und/oder dass die zweite Temperatur und/oder die zweite Zeitspanne derart gewählt werden/wird, dass die Korrosionsbeschichtung des Magnets vollständig zersetzt wird. Die Korrosionsbeschichtung kann grundsätzlich beliebig sein; beispielsweise liegt sie als organische oder als anorganische Korrosionsbeschichtung vor. Besonders bevorzugt ist die Korrosionsbeschichtung eine rein organische Korrosionsbeschichtung, weist also ausschließlich organische Bestandteile auf.

Die Korrosionsbeschichtung soll, insbesondere falls sie teilweise oder vollständig organisch ist, zumindest während der zweiten thermischen Behandlung vollständig zersetzt werden. Hierzu werden die zweite Temperatur und/oder die zweite Zeitspanne entsprechend gewählt. Eine anorganische Korrosionsbeschichtung kann - auch vollständig - erhalten bleiben. Während der ersten thermischen Behandlung kann es vorgesehen sein, dass die, insbesondere organische, Korrosionsbeschichtung vollständig erhalten bleibt. Alternativ kann es selbstverständlich auch vorgesehen sein, dass die Korrosionsbeschichtung bereits während der ersten thermischen Behandlung vollständig zersetzt wird, insbesondere falls sie organisch ist. In jedem Fall sind die erste Temperatur und/oder die erste Zeitspanne entsprechend zu wählen.

Eine Weiterbildung der Erfindung sieht vor, dass die erste thermische Behandlung unter Sauerstoffeinfluss oder Sauerstoffausschluss und/oder die zweite thermische Behandlung unter Sauerstoffausschluss oder unter geringerem Sauerstoffeinfluss als während der ersten thermischen Behandlung erfolgt. Das Durchführen der thermischen Behandlung unter Sauerstoffeinfluss bedeutet im Wesentlichen, dass die Baugruppe beziehungsweise der Magnet während der entsprechenden thermischen Behandlung Sauerstoff ausgesetzt ist, welcher insbesondere als Bestandteil von Umgebungsluft vorliegt. Während der thermischen Behandlung kann der Magnet beziehungsweise die Baugruppe also mit Umgebungsluft beaufschlagt sein.

Alternativ kann die thermische Behandlung unter Sauerstoffausschluss durchgeführt werden. Dies kann beispielsweise durch eine Reduzierung des Sauerstoffpartialdrucks im Vergleich zur Umgebungsluft realisiert sein. Besonders bevorzugt beträgt der Sauerstoffpartialdruck gleich Null oder ist zumindest nahezu gleich Null, sodass der Magnet beziehungsweise die Baugruppe während der thermischen Behandlung nicht mit Sauerstoff beaufschlagt wird. Alternativ kann die thermische Behandlung, die unter Sauerstoffausschluss durchgeführt wird, in einem Teilvakuum oder einem Vakuum durchgeführt werden.

Die erste thermische Behandlung kann entweder unter Sauerstoffeinfluss oder unter Sauerstoffausschluss vorgenommen werden, wobei ersteres bevorzugt wird. Die zweite thermische Behandlung soll dagegen unter Sauerstoffausschluss erfolgen, zumindest jedoch unter geringerem Sauerstoffeinfluss als während der ersten thermischen Behandlung. Das bedeutet vorzugsweise, dass der Sauerstoffpartialdruck in einem den Magnet beziehungsweise die Baugruppe einhüllenden Medium während der zweiten thermischen Behandlung niedriger ist als während der ersten thermischen Behandlung. Dies ist sinnvoll, weil die zweite thermische Behandlung bei einer höheren Temperatur durchgeführt wird als die erste thermische Behandlung, sodass es bei übermäßigem Sauerstoffeinfluss zu einer Oxidation des Magnets beziehungsweise von den Magnet bildendem Magnetwerkstoff kommen könnte. Dies wird durch den geringeren Sauerstoffeinfluss beziehungsweise die Durchführung der zweiten thermischen Behandlung unter Sauerstoffausschluss zuverlässig vermieden.

Weiterhin kann im Rahmen einer bevorzugten Ausgestaltung der Erfindung vorgesehen sein, dass der Magnet nach der zweiten thermischen Behandlung materialabtragend behandelt wird. Hierdurch sollen beispielsweise Verunreinigungen an einer Oberfläche des Magnets abgetragen werden. Zusätzlich oder alternativ kann die Behandlung der Entfernung der Korrosionsbeschichtung dienen. Die materialabtragende Behandlung erfolgt beispielsweise durch Sandstrahlen, Schleifen oder ähnliche Methoden.

Eine Weiterbildung der Erfindung sieht vor, dass der Magnet in einen Magnetwerkstoff zersetzt wird, insbesondere chemisch und/oder mechanisch. Das Zersetzen des Magnets in den Magnetwerkstoff ist vorzugsweise nach der zweiten thermischen Behandlung oder nach der materialabtragenden Behandlung vorgesehen. Das Zersetzen kann grundsätzlich beliebig erfolgen. Das chemische Zersetzen erfolgt beispielsweise durch Wasserstoffversprödung, welches bevorzugt unter Sauerstoffausschluss oder in Schutzgasatmosphäre durchgeführt wird. Das mechanische Zersetzen erfolgt beispielsweise durch Zermahlen. Es ist auch möglich, zunächst ein chemisches Zersetzen, insbesondere durch Wasserstoffversprödung, vorzunehmen und anschließend den Magnet endgültig mechanisch zu zersetzen, insbesondere durch Zermahlen. Aus dem Zersetzen resultiert der Magnetwerkstoff.

Schließlich kann es vorgesehen sein, dass der Magnetwerkstoff unter Zugabe einer der folgenden Stoffe zu einem Recyclingmagnet verarbeitet wird: Frischwerkstoff und/oder Bindemittel. Der aus dem Magnet gewonnene Magnetwerkstoff soll zum Wiederverwerten zu dem Recyclingmagnet verarbeitet werden. Hierzu kann es vorgesehen sein, dem Magnetwerkstoff zunächst den Frischwerkstoff und/oder das Bindemittel zuzugeben. Unter dem Frischwerkstoff ist nicht recycelter Magnetwerkstoff zu verstehen, also aus Rohmaterialien gewonnener Magnetwerkstoff.

Der Frischwerkstoff kann alternativ oder zusätzlich auch in Form eines oder mehrerer einzelner Bestandteile des Magnetwerkstoffs oder Verbindungen von diesen vorliegen oder diese aufweisen. Als Beispiele für derartige Bestandteile oder Verbindungen seien Neodym, Neodymhydroxid, FeNd und DyF₃ genannt. Das Verarbeiten des Magnetwerkstoffs zu dem Recyclingmagnet kann grundsätzlich auf beliebige Art und Weise erfolgen, beispielsweise durch Sintern. Hierzu wird der Magnetwerkstoff, welchem wenigstens einer der genannten Stoffe zugesetzt sein kann, zunächst gepresst und anschließend gesintert. Nachfolgend kann eine sekundäre Wärmebehandlung vorgesehen sein.

Besonders bevorzugt erfolgen die vorstehend genannten Schritte, insbesondere die erste thermische Behandlung, das mechanische Heraustrennen, die zweite thermische Behandlung, die materialabtragende Behandlung und/oder das Zersetzen in den Magnetwerkstoff in kontrollierter Atmosphäre. Darunter ist zu verstehen, dass der Sauerstoffgehalt der mit dem Magnet und/oder dem Magnetwerkstoff in Verbindung stehenden Atmosphäre auf einen bestimmten Wert eingestellt wird. Beispielsweise erfolgt dies derart, dass während des gesamten Verfahrens, bestehend aus den genannten Schritten, ein Sauerstoffeintrag in den Magnet und/oder den Magnetwerkstoff von höchstens 1 Gew.-%, höchstens 0,9 Gew.-%, höchstens 0,8 Gew.-%, höchstens 0,7 Gew.-%, höchstens 0,6 Gew.-% oder höchstens 0,5 Gew.-% erfolgt. Hierdurch wird eine hervorragende Temperaturstabilität der magnetischen Eigenschaften des Recyclingmagnets realisiert.

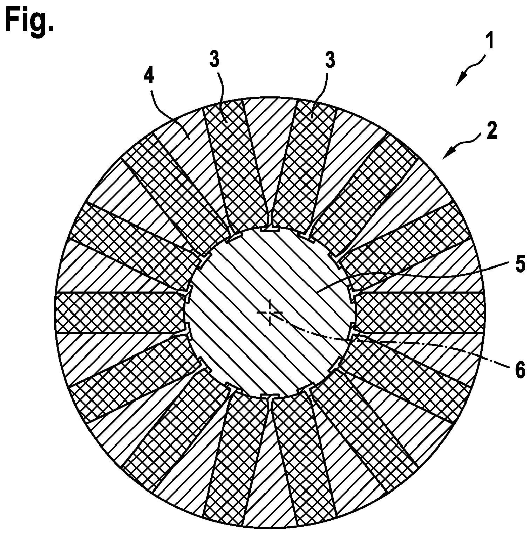

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine Querschnittdarstellung durch eine Baugruppe einer elektrischen Maschine.

Die Figur zeigt einen Teil einer elektrischen Maschine 1 im Querschnitt, nämlich eine Baugruppe 2 der elektrischen Maschine 1. Die Baugruppe 2 weist wenigstens einen Magnet 3, in dem hier dargestellten Ausführungsbeispiel eine Vielzahl von Magneten 3 auf. Der Magnet 3 liegt beispielsweise in Form eines Dauermagnets vor. Der Magnet 3 ist in einem Blechteil 4 der Baugruppe 2 angeordnet beziehungsweise wird von diesem gehalten. Über das Blechteil 4 ist der Magnet 3 drehfest mit einer Welle 5 verbunden. Die Welle 5 dient einer drehbaren Lagerung der Baugruppe 2 um eine Drehachse 6 in der elektrischen Maschine 1 beziehungsweise in einem Maschinengehäuse der elektrischen Maschine 1. Die Befestigung des Magnets 3 an dem Blechteil 4 kann mittels Magnetklebstoff realisiert sein.

Zum Wiederverwerten des Magnets 3 wird nun zunächst die Baugruppe 2 aus der elektrischen Maschine 1 ausgebaut, insbesondere zusammen mit der Welle 5. Anschließend kann es vorgesehen sein, die Welle 5 mechanisch von der Baugruppe 2 zu lösen, beispielsweise durch Auspressen der Welle 5 in axialer Richtung bezüglich der Drehachse 6.

Anschließend wird die Baugruppe 2 einer ersten thermischen Behandlung bei einer ersten Temperatur und über eine erste Zeitspanne hinweg zugeführt. Die erste thermische Behandlung dient dem teilweisen Zersetzen des an dem Magnet 3 vorliegenden Magnetklebstoffs. Anschließend wird der Magnet 3 mechanisch aus der Baugruppe 2 herausgetrennt. Das bedeutet also, dass das Blechteil 4 von dem Magnet 3 getrennt wird. Dies kann beispielsweise durch Rütteln erfolgen. Auch andere Trennverfahren können jedoch vorgesehen sein. Nachfolgend wird der Magnet 3 einer zweiten thermischen Behandlung bei einer zweiten Temperatur und über eine zweite Zeitspanne hinweg zugeführt. Die zweite Temperatur ist höher als die erste Temperatur. Zusätzlich oder alternativ ist die zweite Zeitspanne länger als die erste Zeitspanne. Die zweite thermische Behandlung dient dem vollständigen Zersetzen des Magnetklebstoffs.

Nach der zweiten thermischen Behandlung kann es vorgesehen sein, dass der Magnet 3 materialabtragend behandelt wird, beispielsweise durch Schleifen und/oder Sandstrahlen. Anschließend wird der Magnet 3 in einen Magnetwerkstoff zersetzt, wobei dies vorzugsweise chemisch und/oder mechanisch erfolgt. Beispielsweise wird der Magnet 3 zunächst chemisch aufgespalten und anschließend mechanisch zerkleinert. Ersteres erfolgt insbesondere mittels Wasserstoffversprödung, letzteres durch Mahlen. Aus dem auf diese Art und Weise erhaltenen Magnetwerkstoff kann ein Recyclingmagnet hergestellt werden. Hierzu kann dem Magnetwerkstoff wenigstens ein Zusatzstoff zugesetzt werden, wobei als Zusatzstoff besonders bevorzugt Frischwerkstoff und/oder ein Bindemittel verwendet wird.

Wenigstens eine der thermischen Behandlungen wird bevorzugt unter Sauerstoffausschluss durchgeführt. Es kann auch vorgesehen sein, dass der Sauerstoffeinfluss während der ersten thermischen Behandlung größer ist als während der zweiten thermischen Behandlung. Hierzu wird beispielsweise der Sauerstoffpartialdruck während der zweiten thermischen Behandlung im Vergleich zu der ersten thermischen Behandlung abgesenkt.

Mit dem beschriebenen Verfahren zum Wiederverwerten des wenigstens einen Magnets 3 kann ein Recyclingmagnet hergestellt werden, welcher nahezu dieselben magnetischen Eigenschaften hat wie der Magnet 3. Dies wird insbesondere durch die beiden aufeinanderfolgenden thermischen Behandlungen mit dem darauf folgenden Zersetzen des Magnets 3 in den Magnetwerkstoff erzielt.

## Patentansprüche

1. Verfahren zum Wiederverwerten wenigstens eines Magnets (3) einer elektrischen Maschine (1), wobei eine den Magnet (3) aufweisende Baugruppe (2) aus der elektrischen Maschine (1) ausgebaut wird, **gekennzeichnet durch** die folgenden Schritte:
- Durchführen einer ersten thermischen Behandlung der Baugruppe (2) bei einer ersten Temperatur,
- mechanisches Heraustrennen des Magnets (3) aus der Baugruppe (2), sowie
- Durchführen einer zweiten thermischen Behandlung des Magnets (3) bei einer zweiten Temperatur, die höher ist als die erste Temperatur, zum Entbindern und/oder Reinigen des Magnets (3).

2. Verfahren nach Anspruch 1, **dadurch gekennzeichnet, dass** die erste Temperatur und/oder eine erste Zeitspanne, über die die erste thermische Behandlung durchgeführt wird, derart gewählt werden/wird, dass während der ersten thermischen Behandlung ein an dem Magnet (3) vorliegender Magnetklebstoff zumindest teilweise, insbesondere nur teilweise, zersetzt wird.

3. Verfahren nach einem der vorhergehenden Ansprüche, **dadurch gekennzeichnet, dass** mittels des nach der ersten thermischen Behandlung durchgeführten Heraustrennens ein Blechteil (4) von dem Magnet (3) mechanisch getrennt wird, insbesondere durch Rütteln.

4. Verfahren nach einem der vorhergehenden Ansprüche, **dadurch gekennzeichnet, dass** der Magnet (3) nach der ersten thermischen Behandlung und vor der zweiten thermischen Behandlung auf eine Temperatur abgekühlt wird, die kleiner ist als die erste Temperatur.

5. Verfahren nach einem der vorhergehenden Ansprüche, **dadurch gekennzeichnet, dass** die zweite Temperatur und/oder eine zweite Zeitspanne, über die die zweite thermische Behandlung durchgeführt wird, derart gewählt werden/wird, dass während der zweiten thermischen Behandlung der an dem Magnet (3) vorliegende Magnetklebstoff vollständig zersetzt wird.

6. Verfahren nach einem der vorhergehenden Ansprüche, **dadurch gekennzeichnet, dass** die erste Temperatur und/oder die erste Zeitspanne derart gewählt werden/wird, dass eine Korrosionsbeschichtung des Magnets (3) vollständig erhalten bleibt und/oder dass die zweite Temperatur und/oder die zweite Zeitspanne derart gewählt werden/wird, dass die Korrosionsbeschichtung des Magnets (3) vollständig zersetzt wird.

7. Verfahren nach einem der vorhergehenden Ansprüche, **dadurch gekennzeichnet, dass** die erste thermische Behandlung unter Sauerstoffeinfluss und/oder Sauerstoffausschluss und/oder die zweite thermische Behandlung unter Sauerstoffausschluss oder unter geringerem Sauerstoffeinfluss als während der ersten thermischen Behandlung erfolgt.

8. Verfahren nach einem der vorhergehenden Ansprüche, **dadurch gekennzeichnet, dass** der Magnet (3) nach der zweiten thermischen Behandlung materialabtragend behandelt wird.

9. Verfahren nach einem der vorhergehenden Ansprüche, **dadurch gekennzeichnet, dass** der Magnet (3) in einen Magnetwerkstoff zersetzt wird, insbesondere chemisch und/oder mechanisch.

10. Verfahren nach einem der vorhergehenden Ansprüche, **dadurch gekennzeichnet, dass** der Magnetwerkstoff unter Zugabe einer der folgenden Stoffe zu einem Recyclingmagnet verarbeitet wird: Frischwerkstoff und/oder Bindemittel.
